# EUROPEAN PATENT APPLICATION

(11) **EP 1 185 061 A1**
(43) Date of publication of application: **06.03.2002**
(21) Application number: 01302219.9
(22) Date of filing: 12.03.2001
(51) Int. Cl.: H04M 3/42, H04Q 3/00

(54) **Method for automatically activating call forwarding when a mobile unit comes into service**

(30) Priority: 28.08.2000 US 649321
(71) Applicant: LUCENT TECHNOLOGIES INC., Murray Hill, New Jersey 07974-0636 (US)
(72) Inventor: Goss, Stephen C., Wheaton, Illinois 60187 (US); Sands, Phillip Michael, Champaign, Illinois 61820 (US)
(74) Representative: Watts, Christopher Malcolm Kelway, Dr.

(57) **Abstract**

The present invention provides a method for providing automatic call-forwarding to a mobile unit. The mobile unit is registered as an automatic call-forwarding number for a first phone (201). The first phone can be a landline phone or a wireless phone. Upon detection of the mobile unit coming into service (203), calls intended for the first phone are automatically forwarded to the mobile phone (205). This call-forwarding occurs automatically without further input from a user. Upon detection of the mobile unit going out of service (207), such as when the mobile unit powers off or leaves the service area of the wireless service provider, the automatic call-forwarding to the mobile phone is terminated (209).

## Description

### Field of the Invention

The present invention relates generally to communication systems, and more particularly to a method for providing call forwarding service.

### Background of the Invention

Call forwarding allows calls intended for a first phone to be forwarded to a second phone. Call forwarding is typically initiated by inputting into the first phone a predefined sequence followed by the telephone number of the second phone. Thereafter, calls for the first phone are forwarded to the second phone. Calls are forwarded until call forwarding is cancelled, typically by inputting a predefined key sequence on the first phone. In short, call forwarding is manually activated by keying the required digits and manually deactivated in a similar manner, typically by keying predefined digits on the first phone that alert the first phone that call forwarding is no longer desired.

Many people have both a wireline phone in their home or office and a cellular phone that they utilize while outside of the home or office. When trying to contact someone who has both a wireline and a cellular phone, a caller often has to guess which phone is most likely to be attended and thus answered. If the caller calls the unattended phone, the caller will typically be placed into the user's voice mail or answering machine. The caller then has to either leave a message or hang up and dial the phone number of the user's other phone. This is costly, time-consuming, and frustrating for the caller.

One approach attempted to alleviate the problem of users having multiple phones and therefore multiple phone numbers is to provide a user with a single phone number that is associated with multiple phones. This approach has been difficult and costly to implement. In addition, this approach is not desired in situations where the user desires having two distinct phone numbers, as is the case when a user prefers cell phone contact with certain people and wireline contact with others. Having two distinct phone numbers can therefore be advantageous.

Therefore, a need exists for a method for allowing a user to be contacted at multiple phones without having a single phone number and without having to manually enter a code each time the user wants to initiate a call-forwarding type of functionality.

### Summary of the Invention

It is an object of the present invention to provide a method for automatically activating call forwarding for calls from a first phone to a mobile unit when the mobile unit comes into service. The first phone, also known as the forwarding phone, can be a wireline phone or a mobile phone. A mobile unit comes into service when it is powered on and recognized by a wireless service provider. The mobile unit can be in its home system, or may be roaming in a visited system.

In accordance with this invention, a user signs up for automatic call forwarding service. Automatic call forwarding is provisioned by service providers for the first phone and the mobile phone. Automatic call forwarding is therefore activated in both the wireless system and at the landline central office. Preferably, the subscriber record for the wireless device and the subscriber record for the forwarding phone both include a field indicating that the automatic call forwarding is currently active for this mobile unit. Furthermore, the subscriber record associated with the forwarding system includes a forwarding number field that would be populated with the number of the mobile phone.

In the preferred embodiment, when the mobile phone is powered on and registers with the wireless system, the wireless system checks to see if automatic call forwarding is active at the Mobile Switching Center (MSC) for that subscriber. If automatic call forwarding is active, the MSC sends a message to the forwarding phone's service provider. When the forwarding phone is a mobile/wireless phone, the message is sent to the wireless service provider. When the forwarding phone is a landline phone, the message is sent to the landline phone's central office, which updates the landline's subscriber record in the database. The MSC uses existing signaling systems to send the message. The message updates at least two fields, the automatic call forwarding ON field and the forwarding number field. The automatic call forwarding ON field indicates whether the automatic call forwarding feature is activated for the mobile unit. The forwarding number is the phone number of the mobile unit so that when a call comes in to the forwarding phone, the call will be automatically forwarded to the mobile unit. This is done by looking up the provisioned forwarding number and then routing the call to the mobile phone using existing call processing and routing methods.

When a call is made to the forwarding phone, the service provider checks to determine if the automatic call forwarding feature has been activated for the user as a result of the mobile unit associated with the forwarding number coming into service, as explained earlier. If the mobile unit is in service, the call is forwarded to the mobile unit associated with the forwarding number.

When the mobile unit goes out of service, such as by powering off or leaving an effective wireless coverage area, the call forwarding to that phone is automatically terminated. Calls are then routed to the original number to which they were dialed. The wireless system initiates termination of automatic call forwarding by sending a message to the service provider of the forwarding phone. The message affects the automatic call forwarding ON field associated with the forwarding phone in order to deactivate automatic call forwarding for that phone.

The present invention can be embodied using other techniques, such as Terminating Number Triggers, as explained below. Thus, with this invention, a user can be more reachable because call forwarding is automatically controlled based upon the mobile phone being in service at the time of the call. The present invention provides for automatic activation of call forwarding such that the user does not need to manually activate call forwarding each time he or she leaves the home or the office. The present invention thereby provides for greater access to the user, a lower frequency of missed phone calls, and an increase in time saved by not requiring the user to manually forward calls each time the user leaves the home or office.

### Brief Description of the Drawings

FIG. 1 depicts a communication system in accordance with the present invention.

FIG. 2 depicts a flowchart of a method for providing automatic call-forwarding to a mobile unit in accordance with the present invention.

FIG. 3 depicts a user record utilized in providing automatic call forwarding in accordance with the alternate embodiment of the present invention.

### Description of the Preferred Embodiment(s)

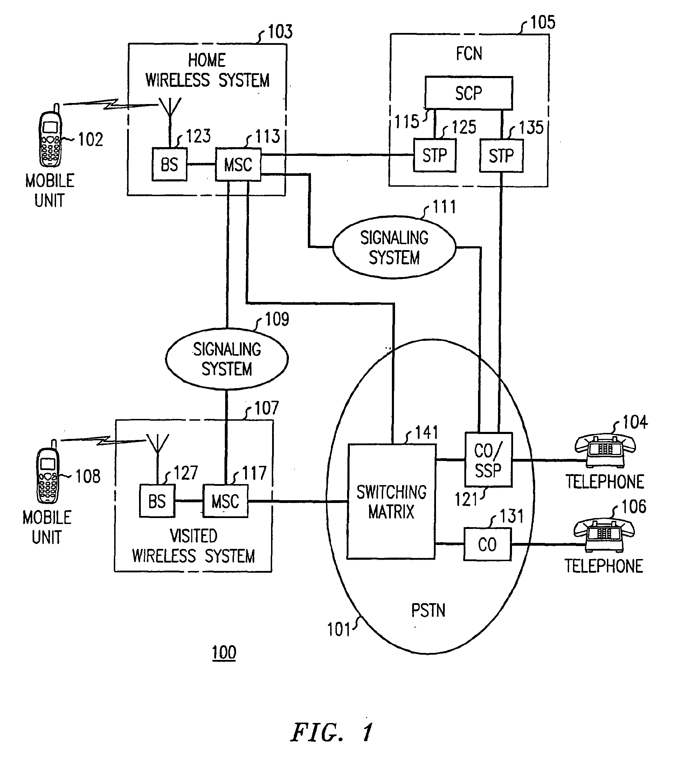

FIG. 1 depicts a communication system 100 in accordance with the present invention. Communication system 100 includes Public Switched Telephone Network (PSTN) 101, Home Wireless System 103, Feature Control Network (FCN) 105, Visited Wireless System 107, Signaling System 109, and Signaling System 111. Mobile unit 102, telephone 104, telephone 106, and mobile unit 108 are depicted and are capable of communicating with each other via communication system 100.

Mobile unit 102 is a wireless device, preferably a cellular phone. Mobile unit 102 can alternately be a pager, a wireless internet access device, or any other wireless device that communicates over Radio Frequencies (RF) with home wireless system 103.

Mobile unit 108 is a wireless device, preferably a cellular phone. Mobile unit 108 can alternately be a pager, a wireless internet access device, or any other wireless device that communicates over Radio Frequencies (RF) with visited wireless system 107.

PSTN 101 includes a Central Office/Service Switching Point (CO/SSP) 121, Central Office (CO) 131, and switching/transmission matrix 141 which includes other switches and interconnections associated with PSTN 101.

Home Wireless System 103 is preferably a cellular system that includes Mobile Switching Center (MSC) 113 and at least one Base Station (BS) 123. Alternately, home wireless system 103 can be a paging system, a mobile internet system, or any wireless system that provides communication over RF with mobile unit 102.

Feature Control Network (FCN) 105, used in the alternate embodiment of the invention, is preferably a conventional Intelligent Network (IN) which includes a Service Control Point (SCP) 115 and Signal Transfer Points (STPs) 125 and 135. Alternately, FCN 105 can be an adjunct processor and database.

Visited Wireless System 107 is preferably a cellular system that includes Mobile Switching Center (MSC) 117 and at least one Base Station (BS) 127. Alternately, Visited Wireless System 107 can be a paging system, a mobile internet system, or any other wireless system.

Signaling system 109 is disposed between Home Wireless System 103 and Visited Wireless System 107 and provides for control signals to be sent between the systems. Signaling system 109 can be based on standardized protocols, such as TIA/EIA-41 or GSM MAP, or can be a proprietary design.

Signaling system 111 is disposed between home wireless system 103 and PSTN 101 and provides for control signals to be sent between the systems. Signaling system 111 is preferably an SS7 system.

In the present invention, the first phone, or forwarding phone, can be either a wireline phone, such as phone 104, or a wireless or mobile unit, such as mobile unit 108.

In accordance with the present invention, when mobile unit 102 comes into service, calls intended for a first phone, such as wireline phone 104 or mobile phone 108, are automatically forwarded to mobile unit 102. Mobile unit 102 comes into service when it is powered on and registers with home system 103. Alternately, mobile unit 102 can come into service when roaming into and registering with visited system 107.

When mobile phone 102 powers up and registers with home wireless system 103, MSC 113 checks to see if the automatic call forwarding feature is activated for this subscriber. This is done by checking the subscriber record in the database associated with home wireless system 103. The database can be located at MSC 113 or at some centralized location in the network.

If automatic call forwarding is active, a message is sent to CO/SSP 121, via signaling system 111, indicating that landline phone 104 should forward calls to mobile unit 102. Upon receiving the message from MSC 113, CO/SSP 121 looks up phone 104's subscriber record to ensure that automatic call forwarding is activated for phone 104. If automatic call forwarding is activated for phone 104, phone 104's central office database forwarding number field will be populated with the number of mobile phone 102.

Thus, when incoming calls to phone 104 are made, call processing will determine whether or not automatic call forwarding is active for the user, and, if so, call processing will forward the incoming call to mobile phone 102 using existing call processing and routing methods. The forwarding is determined by the number given in the forwarding number field of the landline phone's subscriber field.

The scenario is reversed when the mobile unit powers down or roams to another system which does not have this feature. For example, when mobile unit 102 powers down, the subscriber record is updated such that automatic call forwarding is deactivated in MSC 113 and a message is sent to CO/SSP 121. At CO/SSP 121, the subscriber record for phone 104 is updated to deactivate automatic call forwarding for the user.

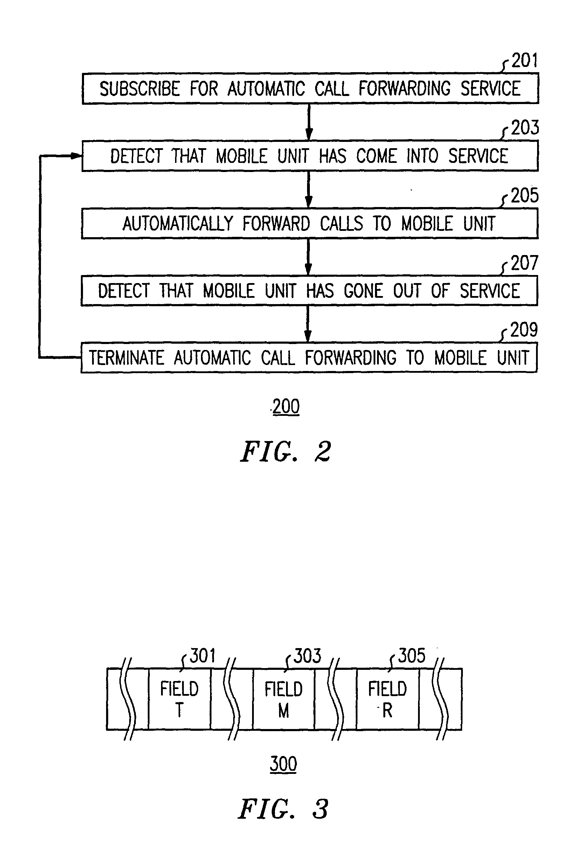

FIG. 2 depicts a flowchart 200 of a method for providing automatic call-forwarding to a mobile unit in accordance with an alternate embodiment of the present invention. While FIG. 1 and FIG. 2 relate to both the preferred and alternate embodiments of the present invention, FIG. 3 relates to the alternate embodiment of the present invention.

The user of telephone 104 and mobile unit 102 subscribes (201) for automatic call forwarding service. The automatic call forwarding service is set up such that calls intended for telephone 104 are automatically forwarded, without further user input, to mobile unit 102 any time that mobile unit 102 is in service. In this manner, a user will be forwarded calls that were originally directed to his or her wireline phone 104, such as a home telephone or work telephone, to mobile unit 102. The forwarding phone 104 is depicted as a wireline phone in FIG. 1, but can alternately be wireless phone 108 or other telecommunication device.

Automatic call forwarding service involves the partnering of both a wireline and a wireless service provider. A user subscribes (201) for automatic call forwarding service by registering with either the wireline or wireless service provider.

After the user has subscribed for automatic call forwarding service, the wireline service provider will provision CO/SSP 121 so that it treats the number of telephone 104 as a terminating number trigger. Thus, when a call destined for phone 104 comes into CO/SSP 121, CO/SSP 121 sends an inquiry to FCN 105 to determine how to route the call. To facilitate routing, a user record 300, shown in FIG. 3, for the owner of telephone 104 and mobile unit 102 is stored in SCP 115 of FCN 105. User record 300 could alternately be stored in a database coupled to CO/SSP 121.

FIG. 3 depicts user record 300 utilized in providing automatic call-forwarding service in accordance with the alternate embodiment of the present invention. User record 300 preferably includes a plurality of data entry fields, although only three are depicted for clarity. Field T 301 includes the phone number of telephone 104. Field M 303 includes the phone number associated with mobile unit 102. Field T 301 and Field M 303 are used to identify this particular user record. For example, when a routing query is received, the database where user record 300 is stored can be searched to find the record whose contents of field T 301 match the dialed number. Alternately, a single field can be used and associated with both telephone 104 and mobile unit 102.

Field R 305 holds the number to which a call intended for telephone 104 should be routed. As discussed below, when mobile unit 102 is in service, Field R 305 will be populated with the contents of Field M 303, the phone number of mobile unit 102. When mobile unit 102 is not in service, Field R 305 is populated with the contents of Field T 301, the phone number of telephone 104.

If a call is placed to telephone 104 when mobile unit 102 is not in service, the call will not be forwarded. Upon receiving the call, CO/SSP 121 recognizes the dialed number as a terminating number trigger utilizing known techniques. CO/SSP 121 queries FCN 105 for routing instructions. In this embodiment, FCN 105 is a conventional Intelligent Network (IN), and the query is routed through STP 135 to SCP 115. Alternatively, the query is routed via other networked means to an adjunct processor and database. FCN 105 responds to the query by sending CO/SSP 121 the number in Field R 305, which in this example is the telephone number of telephone 104, since mobile unit 102 is not in service. CO/SSP 121 routes the call to telephone 104.

If the user has subscribed for automatic call forwarding, calls intended for telephone 104 will be automatically forwarded to mobile unit 102 when mobile unit 102 comes into service. The process occurs as follows. MSC 113 detects (203) that mobile unit 102 has come into service. MSC 113 detects that mobile unit 102 has come into service by detecting that mobile unit 102 has powered up and registered with home wireless system 103 or visited wireless system 107. Alternately, MSC 113 detects that mobile unit 102 has come into service by detecting that mobile unit 102 has entered a predetermined service area, such as that covered by home wireless system 103 or visited wireless system 107.

When mobile unit 102 comes into service, home wireless system 103 checks the Home Location Register (HLR) or some other database to see if mobile unit 102 is to receive automatic call forwarding. If so, wireless system 103 sends a message to SCP 115. The message includes the instruction that the service provider should populate Field R 305 of specified user record 300 with the contents of Field M 303, the phone number of mobile unit 102. In this manner, calls directed to telephone 104 will be automatically forwarded (205) to mobile unit 102.

In this example of the present invention, telephone 106 now places a call to telephone 104 after mobile unit 102 is in service. Upon receiving the call, CO/SSP 121 recognizes the dialed number as a terminating number trigger and queries FCN 105 for routing instructions. FCN 105 responds to the query by sending CO/SSP 121 the number in Field R 305, which is the number of mobile unit 102, as explained above. In response, CO/SSP 121 routes the call to home wireless system 103, which locates mobile unit 102 and sends the call to mobile unit 102 through base station 123.

The present invention is also effective when mobile unit 102 roams. Roaming refers to a mobile unit that has registered and is receiving service in a visited wireless system whose coverage area typically lies outside the area covered by the user's home wireless system. When mobile unit 102 powers up in or moves to the geographic region covered by visited wireless system 107, visited wireless system 107 will typically contact home wireless system 103 via signaling system 109 and arrange for service. Thus, when mobile unit 102 is roaming and telephone 106 places a call to telephone 104, the call will proceed analogously as described above when mobile unit/wireless device 102 is located within the area covered by home wireless system 103, with the added steps that home wireless system 103, utilizing techniques known in the art, will contact and re-route the forwarded call to visited wireless system 107. In turn, visited wireless system 107 locates mobile unit 102 and routes the call to mobile unit 102 through base station 127.

Mobile unit 102 may go out of service, such as when it powers off or leaves the effective coverage area. MSC 113 detects (207) that mobile unit 102 has gone out of service and sends a message to FCN 105. The message includes the instruction that FCN 105 should populate Field R 305 of specified user record 300 with the contents of field T 301, the phone number of telephone 104. MSC 113 preferably detects that mobile unit 102 has gone out of service by detecting that the mobile unit has powered off. Alternately, MSC 113 detects that mobile unit 102 has gone out of service by detecting that the mobile unit has left a predetermined service area.

With some air interfaces, provision is made so that when a mobile unit powers down, a "power off" message is sent from the mobile unit to the wireless system. By receiving such a message from mobile unit 102, home wireless system 103 can promptly instruct FCN 105 to set Field R 305 so that calls to telephone 104 are routed to telephone 104. As an alternative to using the "power off" message, or in situations where an air interface does not support such a message, the present invention provides that the home wireless system 103 can send a periodic "query page" to ask mobile unit 102 to make its "in service" status known. If mobile unit 102 does not respond after a predetermined number of queries, home wireless system 103 can make the decision that mobile unit 102 has powered down or is no longer in service. To reduce the number of "query pages", the wireless system preferably sends a query page only after mobile unit 102 fails to respond to a normal call page. Home wireless system 103 then instructs the wireline service provider to set Field R 305 so that subsequent calls to telephone 104 are routed to telephone 104 until mobile unit 102 powers up again. Thus, home wireless system 103 terminates (209) automatic call forwarding to mobile unit 102. Subsequent calls to telephone 104 are then routed to the forwarding phone, either telephone 104 or mobile unit 108, until mobile unit 103 powers up again and processing returns to step 203.

Thus, the present invention provides a method that solves a problem associated with the prior art. The present invention provides a method for automatically activating call forwarding for calls intended for a first phone to a mobile unit whenever the mobile unit is in service. This is accomplished by detecting when the mobile unit comes into service, either by powering on and/or by entering a service area and registering with a system. If the user has signed this mobile unit up for automatic call-forwarding, any calls placed to the designated forwarding phone will automatically be forwarded to the mobile unit.

Once a user has signed up for automatic call forwarding service, call forwarding is automatically activated and forwards calls to the registered mobile unit without further input from the user. This provides for enhanced reliability and an increase in the calls that are properly forwarded. By automatically forwarding calls to the mobile unit whenever it is in service, the user can receive calls at the mobile unit without having to remember to activate the service or press a predefined key sequence. This makes the call-forwarding easier, more consistent, and saves time for the user.

In addition, automatic call-forwarding is automatically terminated when the mobile unit goes out of service. This allows a subscriber to the automatic call forwarding service to receive calls intended for his or her wireline phone at the wireline phone when his or her cellular phone is not currently powered on or in service. Thus the present invention saves the subscriber time by removing the necessity of having to manually enable call forwarding, and then manually disable call forwarding upon returning to the home or office.

While this invention has been described in terms of certain examples thereof, it is not intended that it be limited to the above description, but rather only to the extent set forth in the claims that follow.

## Claims

1. A method for call-forwarding comprising the steps of:
detecting that a mobile unit has come into service; and
upon detecting the mobile unit coming into service, automatically activating call forwarding for calls intended for a first phone to the mobile unit.

2. A method for call-forwarding in accordance with claim 1, wherein the step of detecting that the mobile unit has come into service comprises detecting that the mobile unit has powered up.

3. A method for call-forwarding in accordance with claim 1, wherein the step of detecting that the mobile unit has come into service comprises detecting that the mobile unit has registered for service in a predetermined service area.

4. A method for call-forwarding in accordance with claim 1, the method further comprising the steps of:
detecting that the mobile unit has gone out of service; and
automatically terminating the forwarding of first phone calls to the mobile unit.

5. A method for call-forwarding in accordance with claim 4, wherein the step of detecting that the mobile unit has gone out of service comprises detecting that the mobile unit has powered off.

6. A method for call-forwarding in accordance with claim 4, wherein the step of detecting that the mobile unit has gone out of service comprises detecting that the mobile unit has left a predetermined service area.

7. A method for call-forwarding in accordance with claim 4, wherein the step of detecting that the mobile unit has gone out of service comprises the steps of:
sending a paging message to the mobile unit; and
determining that the mobile unit has gone out of service upon not receiving a response to the paging message.

8. A method for call-forwarding in accordance with claim 7, wherein the step of sending a paging message to the mobile unit occurs on a periodic time basis.

9. A method for call-forwarding in accordance with claim 7, wherein the step of sending a paging message to the mobile unit occurs only after the mobile unit fails to respond to a page that announces -an incoming call.

10. A method for providing call forwarding comprising the steps of:
storing a call-forwarding number associated with a first phone, the call-forwarding number being the number of a mobile unit;
upon detecting that the mobile unit has come into service, determining if the mobile unit is a call-forwarding number for the first phone; and
if the mobile unit is a call-forwarding number for the first phone, automatically activating call forwarding of calls intended for the first phone to the mobile unit.

11. A method for providing call forwarding in accordance with claim 10, wherein the step of detecting that the mobile unit has come into service comprises detecting that the mobile unit has powered up.

12. A method for providing call forwarding in accordance with claim 10, wherein the step of detecting that the mobile unit has come into service comprises detecting that the mobile unit has registered for service in a predetermined service area.

13. A method for providing call forwarding in accordance with claim 10, the method further comprising the steps of:
detecting that the mobile unit has gone out of service; and
automatically terminating the forwarding of calls intended for the first phone to the mobile unit.

14. A method for providing call forwarding in accordance with claim 13, wherein the step of detecting that the mobile unit has gone out of service comprises detecting that the mobile unit has powered off.

15. A method for providing call forwarding in accordance with claim 13, wherein the step of detecting that the mobile unit has gone out of service comprises detecting that the mobile unit has left a predetermined service area.

16. A method for providing call forwarding in accordance with claim 13, wherein the step of detecting that the mobile unit has gone out of service comprises the steps of:
sending a paging message to the mobile unit, the paging message requesting the mobile unit to make its presence known; and
determining that the mobile unit has gone out of service upon not receiving a response to the paging message.

17. A method for providing call forwarding in accordance with claim 16, wherein the step of sending a paging message to the mobile unit occurs on a periodic time basis.

18. A method for providing call forwarding in accordance with claim 16, wherein the step of sending a paging message to the mobile unit occurs only after the mobile unit fails to respond to a page that announces - an incoming call.

19. A method for providing automatic call-forwarding to a mobile unit comprising the steps of:
receiving a call request for a first telephone;
determining whether a mobile unit is in service; and
automatically forwarding the call request to the mobile unit if it is determined that the mobile unit is in service.
